(19) **Europäisches Patentamt / European Patent Office / Office européen des brevets**

(11) **EP 2 929 284 B1**

(12) **FASCICULE DE BREVET EUROPEEN**

(45) Date de publication et mention de la délivrance du brevet:
**22.05.2019 Bulletin 2019/21**

(21) Numéro de dépôt: **13802627.3**

(22) Date de dépôt: **10.12.2013**

(51) Int Cl.:
*F41H 13/00* (2006.01)    *F41G 7/22* (2006.01)
*G01S 7/495* (2006.01)

(86) Numéro de dépôt international:
**PCT/EP2013/076027**

(87) Numéro de publication internationale:
**WO 2014/090772 (19.06.2014 Gazette 2014/25)**

(54) **DISPOSITIF OPTRONIQUE**

**OPTRONISCHE VORRICHTUNG**

**OPTRONIC DEVICE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2012 FR 1203347**

(43) Date de publication de la demande:
**14.10.2015 Bulletin 2015/42**

(73) Titulaire: **THALES**
**92200 Neuilly-sur-Seine (FR)**

(72) Inventeurs:
- **FONTANELLA, Jean-Claude**
  **78995 Elancourt Cedex (FR)**
- **ROUSSEAU, Pascal**
  **78995 Elancourt Cedex (FR)**

(74) Mandataire: **Lavoix**
**2, place d'Estienne d'Orves**
**75441 Paris Cedex 09 (FR)**

(56) Documents cités:
**WO-A1-02/33342      WO-A2-2004/024559**
**WO-A2-2004/109323   WO-A2-2012/052914**
**DE-A1-102010 051 097  DE-A1-102011 015 779**
**US-A1- 2011 084 195**

- **Sagem: "EUROFLIR 410", , 30 March 2011 (2011-03-30), XP055464911, Retrieved from the Internet: URL:https://www.safran-electronics-defense .com.br/file/download/d1449e_euroflir_410. pdf [retrieved on 2018-04-05]**

**Description**

L'invention concerne un dispositif optronique. L'invention se rapporte également à une plate-forme comportant ce dispositif optronique et à un procédé de protection de la plate-forme précitée. Le document US 2011/084195 A1, le viseur EUROFLIR 410 de Safran et la nacelle Damoclès de Thalès représentent des éléments pertinents de l'état de la technique.

Une plate-forme d'intérêt est adaptée à supporter des hommes, des armes, des capteurs, ou d'autres types d'équipement. Les avions de transport militaire, les avions civils, les hélicoptères, les véhicules blindés, une installation militaire ou un bâtiment civil sont des exemples de plates-formes d'intérêt.

Dans certains cas, la plate-forme d'intérêt est confrontée à des menaces bénéficiant d'un guidage optique ou optronique. Par exemple, des missiles sont guidés par des composants optroniques.

En outre, les équipements guidant ces menaces utilisent des bandes spectrales de plus en plus nombreuses. A titre d'exemple, les bandes visible, proche infrarouge ou thermiques sont utilisées. Un rayonnement appartient à la bande visible si sa longueur d'onde est comprise entre 400 nanomètres (nm) et 800 nm, à la bande proche infrarouge si sa longueur d'onde est comprise entre 800 nm et 2,3 micromètres ($\mu$m) et à la bande thermique si sa longueur d'onde est comprise entre 3 $\mu$m et 5 $\mu$m ou entre 8 $\mu$m et 12 $\mu$m.

Il est donc souhaitable de protéger les différentes plates-formes de toutes les menaces bénéficiant d'un guidage optronique.

Pour cela, il est connu d'utiliser des moyens de détection et de contre-mesures adaptés pour un grand nombre de menaces. Ainsi, il a été proposé des dispositifs optroniques de contre-mesures comportant des lasers permettant, en particulier, le brouillage dans toutes les bandes précitées.

Les lasers employés sont, par exemple, des lasers solides associés à des oscillateurs paramétriques, ces oscillateurs paramétriques permettant de fournir d'importante puissance crête.

De tels lasers s'avèrent encombrants, ce qui pose des problèmes pour les intégrer dans les plates-formes considérées.

Pour résoudre ce problème, les sources lasers sont déportées relativement loin des systèmes d'imagerie et de pointage de faisceau de la plate-forme. Cet éloignement impose l'emploi d'optiques de transport en plus d'optiques de collimation pour amener les faisceaux lasers depuis la sortie des sources lasers jusqu'aux systèmes d'imagerie et de pointage.

La multiplicité des longueurs d'ondes des sources laser impose aux optiques de transport et de collimation d'être adaptées à transmettre de multiples longueurs d'onde différentes avec une faible absorption. Le traitement des optiques requis s'avère alors difficile à réaliser techniquement et onéreux.

Il existe donc un besoin pour un dispositif optronique qui soit de réalisation et de mise en oeuvre plus simple que les dispositifs connus de l'état de la technique.

Selon l'invention, ce but est atteint par un dispositif optronique propre à émettre une pluralité de longueurs d'onde selon la revendication 1.

Le dispositif comprend une caméra d'observation. Le dispositif comprend, pour chaque longueur d'onde de la pluralité de longueurs d'onde, une unité laser comportant une source laser et un système optique. La source laser est propre à émettre un faisceau laser à la longueur d'onde de l'unité laser. Le système optique présente un coefficient de transmission maximal pour la longueur d'onde de l'unité laser.

Suivant des modes de réalisation particuliers, le dispositif optronique comprend une ou plusieurs des caractéristiques suivantes, prise(s) isolément suivant toute combinaison techniquement possible :

- le dispositif comporte un support muni d'une face comportant au moins deux ouvertures.
- la face est située devant les sources laser et la caméra d'observation de sorte que les faisceaux laser émis par les sources laser passent à travers au moins une ouverture et les rayons lumineux en provenance du champ d'observation de la caméra passent à travers une ouverture de la face différente de la ou des ouvertures à travers lesquelles les faisceaux laser émis par les sources laser passent.
- la face comporte une ouverture centrale et des ouvertures périphériques.
- les ouvertures périphériques sont agencées en anneau.
- les ouvertures périphériques sont agencées en lignes.
- les rayons lumineux en provenance du champ d'observation de la caméra passent à travers l'ouverture centrale et chaque faisceau laser émis par les sources laser passe à travers une ouverture périphérique.
- chaque source laser est une diode laser.
- chaque source laser est une diode laser à cascade quantique.
- le système optique de chaque unité laser comprend un système de déviation de faisceau.
- la caméra est munie d'une optique.
- l'optique de la caméra et les systèmes optiques sont en saillie par rapport à la face d'au plus dix centimètres.
- le dispositif optronique est un dispositif de contre-mesures.
- le dispositif optronique est un dispositif d'observation « imagerie active multispectrale».

L'invention concerne aussi une plate-forme comprenant un dispositif optronique tel précédemment décrit.

Suivant des modes de réalisation particuliers, la plate-forme comprend une ou plusieurs des caractéristiques suivantes, prise(s) isolément suivant toute combinaison techniquement possible :

- la plate-forme comporte un corps.
- le dispositif est mobile par rapport au corps de la plate-forme en rotation suivant deux axes perpendiculaires.
- le dispositif est intégré dans le corps de la plate-forme.

L'invention concerne aussi un procédé de protection d'une plate-forme telle que précédemment décrite, le procédé comportant une étape de détection d'au moins une menace de la plate-forme par le dispositif optronique. Le procédé comporte également une étape de choix d'une action à mener à l'encontre de la ou les menaces et une étape de neutralisation de la ou des menaces par un ou des faisceaux laser des unités laser du dispositif optronique.

Suivant des modes de réalisation particuliers, le procédé comprend une ou plusieurs des caractéristiques suivantes, prise(s) isolément ou suivant toute combinaison techniquement possible :

- le procédé comporte, en outre, une étape de détermination de la position de la ou des menaces.
- le procédé comporte, en outre, une étape de centrage d'un ou des faisceaux laser des unités laser sur la ou les menaces.

D'autres caractéristiques et avantages de l'invention apparaîtront à la lecture de la description qui va suivre de modes de réalisation de l'invention, donnée uniquement à titre d'exemple et faite en référence aux dessins qui sont :

- figure 1, une vue schématique d'une partie d'une plate-forme munie d'un dispositif optronique de contre-mesures selon un premier mode de réalisation de l'invention,
- figure 2, une vue schématique d'une section de la partie de la plate-forme de la figure 1 selon l'axe II-II,
- figure 3, un ordinogramme d'un exemple de mise en oeuvre d'un procédé de protection d'une plate-forme comportant un dispositif optronique de contre-mesures selon l'invention, et
- figure 4, une vue schématique d'une section d'un exemple de dispositif optronique de contre-mesures selon un deuxième mode de réalisation de l'invention.

Dans ce qui suit, trois axes X, Y et Z perpendiculaires entre eux sont définis.

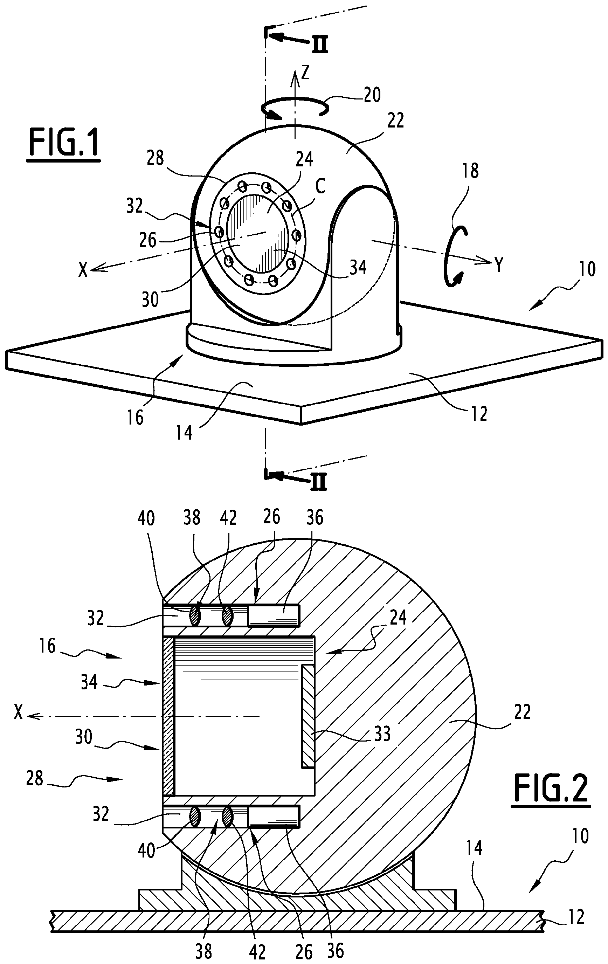

Seule une partie de la plate-forme 10 est représentée à la figure 1.

La plate-forme 10 comprend un corps 12.

Le corps 12 a une surface extérieure 14 sensiblement plane.

La plate-forme 10 comprend également un dispositif 16 optronique de contre-mesures propre à émettre une pluralité de longueurs d'onde. Dans le cadre de cette invention, une longueur d'onde est le centre de l'émission d'une bande spectrale. Une bande spectrale est typiquement une bande de largeur 300 nanomètres.

Le dispositif 16 est relié au corps 12. Le dispositif 16 est mobile par rapport au corps 12 de la plate-forme 10 en rotation suivant les axes Y et Z. Les flèches 18, 20 symbolisent ces possibilités de mouvement.

Pour une plate-forme, l'axe Y est alors appelé site et l'axe Z est appelé azimut.

En pratique, la mobilité du dispositif 16 est obtenue par l'aide de deux axes motorisés, chaque axe motorisé étant adapté à faire tourner le dispositif 16 autour d'une des deux directions Y, Z.

Dans l'exemple de la figure 1, le dispositif 16 comporte un support 22, une caméra 24 d'observation et une pluralité d'unités laser 26.

Le support 22 est un boîtier appelé « boule » de forme générale sphérique comportant une face 28 avec une pluralité d'ouvertures 30, 32.

Selon une variante, le support 22 a une forme différente, par exemple une forme de parallélépipède rectangle.

La face 28 est normale à l'axe X.

Dans la suite, les termes « devant » et « derrière » sont définis de sorte que le support 22 est derrière la face 28.

La face 28 comporte une ouverture centrale 30 et dix ouvertures périphériques 32.

Selon une variante, le nombre d'ouvertures périphériques 32 est différent de dix.

L'ouverture centrale 30 et les ouvertures périphériques 32 sont des ouvertures circulaires.

D'autres formes pour les ouvertures centrale 30 et périphériques 32 sont envisageables, comme des formes carrées ou elliptiques.

L'ouverture centrale 30 a un diamètre plus grand que les ouvertures périphériques 32.

Selon l'exemple de la figure 1, les diamètres des ouvertures périphériques 32 sont identiques.

En variante, chaque ouverture périphérique 32 est associée à une longueur d'onde. Les diamètres des ouvertures périphériques 32 peuvent être différents selon la longueur d'onde et la divergence recherchée pour le faisceau associé.

En outre, les ouvertures périphériques 32 sont agencées en anneau autour de l'ouverture centrale 30.

Les centres des ouvertures périphériques 32 sont sur un cercle dont le centre est le centre de l'ouverture centrale 30 et dont le diamètre est supérieur au diamètre de l'ouverture centrale 30.

Selon une variante, les ouvertures périphériques 32 sont réparties suivant deux lignes parallèles agencées en périphérie de l'ouverture centrale 30.

Selon encore une autre variante, les ouvertures périphériques 32 et centrale 30 sont réparties en fonction de l'espace disponible de la face 28.

La caméra 24 comprend un détecteur 33 et une optique 34.

Selon une variante, la caméra 24 comprend des fonctions de détection de départ de missile (souvent désignés sous l'acronyme DDM) et/ou de départ de coup de feu (aussi connus sous l'acronyme HFI en référence à la terminologie anglaise « Hostile Fire Indicator »).

Selon l'exemple de la figure 1, la caméra 24 est une caméra matricielle. Le détecteur 33 est une matrice de capteurs.

Dans le cas particulier de la figure 1, la caméra 24 est propre à détecter de la lumière émise avec au moins une longueur d'onde parmi la pluralité de longueurs d'onde que le dispositif 16 est propre à émettre.

En variante, la caméra 24 n'est pas propre à détecter les longueurs d'onde que le dispositif 16 est propre à émettre.

Selon l'exemple de la figure 1, la caméra 24 peut être multispectrale, c'est-à-dire adaptée à détecter des longueurs d'onde différentes.

De préférence, la caméra 24 est adaptée à détecter des longueurs d'onde comprises dans la bande visible, dans la bande proche infrarouge ou dans les bandes thermiques.

La caméra 24 d'observation est positionnée dans le support 22 derrière la face 28.

La caméra 24 est orientée pour que l'axe optique de la caméra 24 soit l'axe X.

Chaque unité laser 26 est propre à émettre un faisceau laser à une longueur d'onde différente des autres unités laser 26.

En variante, plusieurs unités laser 26 sont associées à la même longueur d'onde. Cela permet d'augmenter la puissance optique disponible pour une longueur d'onde.

A titre d'illustration, en supposant que toutes les unités laser 26 sont propres à émettre un faisceau laser de même intensité et que trois unités laser 26 sont propres à émettre à la même longueur d'onde, l'intensité disponible à la longueur d'onde est alors de trois fois l'intensité d'une unité laser 26.

Chaque unité laser 26 comporte une source laser 36 et un système optique 38.

La source laser 36 est propre à émettre un faisceau laser présentant un facteur $M^2$ inférieur à 2,0, de préférence inférieur à 1,2.

Le facteur $M^2$, aussi appelé facteur de qualité de faisceau ou facteur de propagation de faisceau, est une mesure usuelle de la qualité de faisceau d'un faisceau laser. Selon la norme ISO 11146, il est défini comme le produit du waist (col Gaussien) du faisceau par la demi-divergence du faisceau mesurée en champ lointain divisé par $\lambda/\pi$ où $\lambda$ est la longueur d'onde. Ce paramètre correspond au produit obtenu si on considère un faisceau gaussien du laser limité par la diffraction à la même longueur d'onde. Autrement dit, il peut être écrit que la demi-divergence angulaire du faisceau lumineux est donnée par l'expression mathématique suivante :

$$\theta = M^2 \, \lambda/(\pi. \, \omega_0),$$

où :

- $\theta$ est la demi-divergence angulaire du faisceau lumineux ;
- $\omega_0$ est le rayon du faisceau au waist ; et
- $\lambda$ la longueur d'onde du faisceau laser.

Selon le standard ISO 11146, le facteur $M^2$ est calculé en mesurant l'évolution du rayon du faisceau le long de la direction de propagation (cette évolution est aussi appelée caustique). Des méthodes alternatives basées sur des mesures de front d'onde comme des mesures par Shack-Hartmann existent également mais ne sont pas considérées dans le cadre de cette invention, le facteur $M^2$ étant défini selon la norme 11146.

Le faisceau issu de la source laser 36 est quasiment limité par la diffraction et présente une divergence angulaire limitée par rapport à un faisceau dont le facteur $M^2$ est grand.

A titre d'exemple, la source laser 36 est une diode laser à cascade quantique. Une telle diode est également désignée sous l'acronyme anglais QCL pour Quantum Cascade Laser.

Une diode laser à cascade quantique est unipolaire. L'émission laser est obtenue par création de transitions inter-sous-bandes dans une pluralité d'hétérostructures formant des puits quantiques.

Une diode laser à cascade quantique présente un bon rendement (rapport entre l'énergie laser délivrée et l'énergie électrique d'alimentation de la diode laser), notamment dans les bandes 3 $\mu$m à 5 $\mu$m et 8 $\mu$m à 12 $\mu$m. Par exemple, la diode laser à cascade quantique est propre à émettre un faisceau présentant une intensité supérieure à 1 Watt optique.

Selon une variante, la source laser 36 comprend un assemblage de diodes lasers à cascade quantique. Dans ce cas, la source laser 36 est propre à émettre un faisceau présentant une intensité de plusieurs watts optiques.

Le système optique 38 comprend une ou plusieurs optiques 40, 42.

Par exemple, le système optique 38 comporte deux lentilles 40, 42 assurant la collimation du faisceau laser à une divergence voulue.

Chaque optique 40, 42 du système optique 38 présente un coefficient de transmission maximal pour la longueur d'onde d'émission de la source laser 36.

Par le terme « maximal », il est entendu que la courbe de transmission de l'optique 40, 42 en fonction de la longueur d'onde présente au moins un maximum relatif au niveau de la longueur d'onde. De préférence, si cela est techniquement possible, le maximum relatif est un maximum absolu.

Par exemple, selon l'exemple de la figure 1, chaque face des optiques 40, 42 du système optique 38 est revêtue d'un traitement optimisé pour la seule longueur d'onde d'émission de la source laser 36.

Les unités laser 26 sont situées selon l'axe X et sont parallèles avec l'axe optique de la caméra 24.

Cela signifie notamment que les axes optiques de chaque optique 40, 42 des systèmes optiques 38 sont selon une direction parallèle à l'axe X.

Les unités laser 26 sont toutes à proximité de la caméra 24.

Dans le mode de réalisation proposé, les unités laser 26 sont à une distance d'au maximum quinze centimètres du centre de l'ouverture centrale 30.

Selon une variante, une ou plusieurs des unités laser 26 sont des lasers déportés. Un laser déporté est situé à une distance supérieure à quinze centimètres de la face 28. Dans ce cas, le faisceau laser issu du laser est transporté au niveau de la face 28 par un ensemble d'optiques ou par une fibre optique.

En outre, les unités laser 26 sont agencées par rapport aux ouvertures périphériques 32 de sorte que les faisceaux laser émis par les unités laser 26 passent à travers une des ouvertures périphériques 32.

Plus précisément, dans le cas de la figure 1, à chaque ouverture périphérique 32 correspond une seule unité laser 26.

Dans le cas de la figure 1, les axes optiques de chaque optique 40, 42 des systèmes optiques 38 passent par le centre d'une ouverture périphérique 26.

En outre, dans le cas de la figure 1, les unités laser 26 et la caméra 24 sont intégralement situées dans le support 22. De ce fait, les unités laser 26 et la caméra 24 sont situées derrière la face 28.

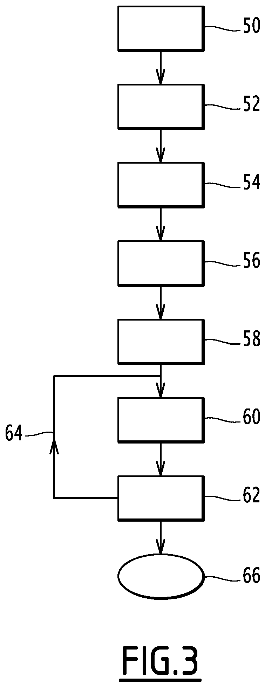

Le fonctionnement du dispositif 16 optronique de contre-mesures est maintenant décrit en référence à la figure 3 qui est un ordinogramme de mise en oeuvre d'un procédé de protection de la plate-forme 10.

Le procédé de protection comporte une étape 50 de détection d'au moins une menace éventuelle susceptible de viser la plate-forme 10.

Une menace est, par exemple, une conduite de tir. Une telle conduite de tir fait, par exemple, partie d'une plate-forme ennemie.

L'étape 50 de détection est mise en oeuvre par utilisation de la caméra 24. Pour permettre la détection, à l'étape de détection, le dispositif 16 est mis en mouvement de rotation selon les deux axes Y et Z de manière à couvrir un champ d'observation plus grand que le champ d'observation de la caméra 24.

En variante, l'étape 50 de détection est mise en oeuvre par coopération avec d'autres systèmes de détection, tel un radar.

L'image acquise par la caméra 24 est affichée par un dispositif d'affichage à un opérateur. Celui-ci est alors capable de déterminer si une conduite de tir est présente dans l'image affichée ou non.

En variante, la détermination de la présence d'une conduite de tir est mise en oeuvre de manière automatisée à l'aide d'un logiciel de reconnaissance.

Le procédé comporte alors une étape 52 d'analyse de la menace détectée à l'étape 50 de détection.

Dans le cas d'une conduite de tir, l'analyse consiste, par exemple, à déterminer le type de conduite de tir, si la conduite de tir est prête à tirer et si la conduite de tir est positionnée de manière à viser la plate-forme 10.

Cette étape 52 d'analyse est effectuée par l'opérateur en étudiant les images affichées par le dispositif d'affichage.

Selon une variante, l'étape 52 d'analyse est également mise en oeuvre de manière automatisée.

En fonction des résultats de l'analyse, une action à mener est choisie à l'étape 54 de choix du procédé. Le terme d'action est à entendre au sens large, comme englobant des actions « actives » comme déterminer plus précisément la position de la menace, neutraliser la menace afin de la rendre inopérante et des actions « passives » comme attendre, ignorer la menace.

Pour la suite, il est supposé que la menace est considérée comme suffisamment dangereuse pour exiger une neutralisation. Dans un tel cas, il convient au préalable de connaître la position de la menace avec une grande précision pour pointer l'unité laser 26.

Dans le cas de l'exemple de la figure 3, le procédé comporte une étape 56 de détection de la position de la menace.

La position est souvent déterminée par la connaissance de deux angles déterminant une direction.

En variante, la position de la menace est déterminée par trois coordonnées.

Par exemple, à cette étape 56 de détection de la position, une détection précise est mise en oeuvre. Une zone d'intérêt dans laquelle se trouve la menace est analysée avec plus de précision en balayant avec un faisceau de lumière la zone d'intérêt. Le balayage se fait par rotation du dispositif 16.

Selon cet exemple, l'étape 56 de détection précise de la position est effectuée en recherchant l'effet oeil-de-chat, c'est-à-dire en cherchant à obtenir une autocollimation d'un faisceau laser émis par une source laser 36 avec une des pièces de l'optique du dispositif de la menace. Cela permet également de confirmer le caractère hostile de la menace puisqu'il est ainsi confirmé que la menace vise la plate-forme 10.

Dans le cas où la menace ennemie se déplace, la position à déterminer est une estimation de la position actuelle basée sur les mouvements antérieurs de la cible.

A l'issue de l'étape 56 de détection de la position de la menace, la position de la menace est connue avec suffisamment de précision pour pouvoir déclencher la neutralisation.

Il est également déterminé la nature de la neutralisation (leurrage, brouillage, aveuglement ou éblouissement) à effectuer sur la menace à une étape 58 de détermination de la nature de la neutralisation à effectuer. Par exemple, les caractéristiques de l'émission laser à envoyer sur la menace sont déterminées. La ou les longueurs d'onde de l'émission laser, la ou les intensités souhaitées et la durée du rayonnement sont des exemples de caractéristiques à déterminer.

Le procédé comporte une étape 60 de neutralisation de la menace. La neutralisation se fait en deux temps: le dispositif 16 est orienté vers la position déterminée à l'aide d'une rotation ou de plusieurs rotations du dispositif 16 de manière à centrer une unité laser 26 sur la menace puis l'unité laser 26 est commandée pour émettre un faisceau optique. La commande de l'unité laser 26 est généralement une commande en courant électrique.

Dans le cas où plusieurs unités laser 26 sont impliquées à l'étape 60 de neutralisation, au lieu de considérer une unité laser 26, il est alors considéré une unité laser fictive dont la position correspond au barycentre de la position des unités laser 26 impliquées dans l'étape 60 de neutralisation.

L'étape 60 de neutralisation est alors mise en oeuvre en orientant le dispositif 16 de manière à centrer l'unité laser fictive sur la menace puis en commandant les différentes unités laser 26 impliquées dans l'étape 60 de neutralisation pour émettre un faisceau laser.

Selon une variante, l'étape 60 de neutralisation est répétée plusieurs fois. Cela permet de s'assurer qu'au moins un faisceau laser atteint la menace lorsque la menace est en mouvement.

Le procédé comprend, aussi, une étape 62 d'étude de l'impact sur la menace de la neutralisation mise en oeuvre à l'étape 60 de neutralisation de la menace.

Il s'agit de vérifier si la menace a été effectivement neutralisée par le faisceau laser qui vient de lui être envoyé ou non.

Le cas échéant, lorsqu'il est déterminé à cette étape que l'éblouissement produit est inexistant ou insuffisant ou simplement en cas de doute, il est procédé à une nouvelle étape 60 de neutralisation. C'est ce que symbolise la flèche 64.

L'étape 60 de neutralisation est alors réitérée jusqu'à ce que la neutralisation produite soit suffisante, ce qui correspond au résultat 66 de l'ordinogramme de la figure 3.

Le dispositif 16 proposé permet donc de protéger efficacement la plate-forme 10 contre une menace extérieure.

En outre, comme le système optique 38 présente un coefficient de transmission maximal pour une seule longueur d'onde, sa fabrication est facilitée et rendue moins onéreuse par rapport à l'état de la technique. Il en résulte une réalisation facilitée du dispositif 16.

Cet effet est encore plus marqué lorsque les sources laser 36 sont des diodes laser parce que les diodes laser sont de faible poids et de faible coût. En outre, les diodes laser présentent un rendement élevé.

L'arrangement à proximité de la caméra 24 et des sources laser 36 permet, en outre, d'éviter l'utilisation d'optiques de transport, réduisant l'encombrement du dispositif 16.

De plus, le dispositif 16 présente une compacité améliorée, notamment lorsque toutes les unités lasers 26 sont à proximité de la face 28.

Dans ce cas, la masse et l'inertie du dispositif 16 à orienter sont faibles ce qui permet une orientation rapide. Il en résulte une diminution de la difficulté à satisfaire les contraintes sur l'orientation des unités laser 26 en termes de qualité de pointé et de capacité de poursuite.

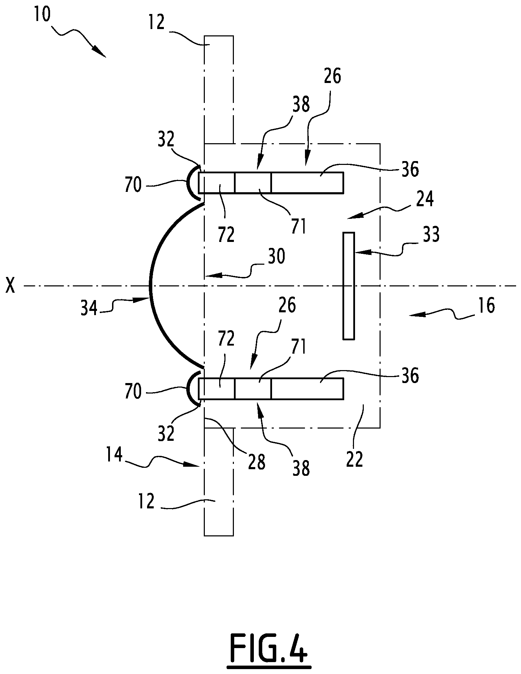

Un deuxième mode de réalisation est proposé pour le dispositif 16 à la figure 4. Les éléments identiques avec le premier mode de réalisation ne sont pas répétés dans la suite, seules les différences étant mises en évidence.

Dans ce mode de réalisation, le dispositif 16 est intégré dans le corps 12 de la plate-forme 10.

En outre, le dispositif 16 est fixe par rapport au corps 12.

Dans le mode de réalisation de la figure 4, une partie de la caméra 24 et une partie des unités laser 26 sont devant la face 28.

Dans l'exemple de la figure 4, l'optique 34 est une optique conférant à la caméra 24 un champ d'observation important, par exemple correspondant à un angle de vision dans chaque direction supérieur à 90°, de préférence supérieur à 120°.

L'optique 34 de la caméra 24 est devant la face 28. L'optique 34 forme une saillie dont l'extension maximale le long de l'axe X est inférieure à dix centimètres de la face 28. De préférence, l'optique 34 forme une saillie dont l'extension maximale le long de l'axe X est inférieure à cinq centimètres.

Chaque système optique 38 comporte un hublot 70 placé devant la face 28 propre à protéger les autres éléments de l'unité laser 26.

De même que pour l'optique 34 de la caméra 24, chaque hublot 70 forme une saillie dont l'extension le long de l'axe optique du système optique 38 auquel appartient le hublot 70 est inférieure à dix centimètres de la face 28. De préférence, chaque saillie a une extension inférieure à cinq centimètres.

Selon l'exemple représenté, l'extension de la saillie formée est la même pour chaque hublot 70.

Dans le cas de la figure 4, chaque hublot 70 forme une saillie dont l'extension le long de l'axe optique du système optique 38 auquel appartient le hublot 70 est strictement inférieure à celle de la saillie de l'optique 34. Notamment, l'extension de la saillie de chaque optique de collimation 70 est égale à 1/5 de l'extension de la saillie de l'optique 34.

En outre, chaque système optique 38 comprend une optique de collimation 71 et un système de déviation de faisceau 72. Selon une variante préférée, le système de déviation de faisceau 72 est placé entre le hublot 70 et l'optique de collimation 71.

Le système de déviation de faisceau 72 est propre à contrôler l'orientation du faisceau émis par la source laser 36, indépendamment de l'axe de la caméra 24 et des faisceaux des autres sources laser 36.

De préférence, le système de déviation de faisceau 72 est propre à orienter le faisceau émis par la source laser 36 dans l'intégralité du champ d'observation de la caméra 24.

A titre d'exemple, le système de déviation de faisceau 72 est un double prisme de Dove.

Un double prisme de Dove comprend deux prismes isocèles en toit à 90° identiques. Ces prismes ont une base collée à l'autre base. Le double prisme de Dove est monté sur un dispositif mécanique permettant de le faire pivoter dans deux directions perpendiculaires.

La rotation des prismes permet de contrôler l'orientation des faisceaux émis par les sources laser 36.

Le dispositif 16 selon le deuxième mode de réalisation est adapté à la mise en oeuvre du même procédé de protection de la plate-forme 10 que le dispositif 16 selon le premier mode de réalisation.

Le dispositif 16 permet une mise en oeuvre plus aisée de certaines étapes du fait que le système de déviation de faisceau 72 permet d'orienter chaque faisceau émis par chaque source laser 36 de manière indépendante.

Les faisceaux laser étant orientables indépendamment du dispositif 16, la menace est prise en compte quelque soit sa position dans le champ de la caméra 14. Il n'y a pas besoin d'orienter le support 22 pour mettre en oeuvre le procédé de protection.

En outre, par rapport au mode de réalisation représenté sur la figure 1, ce dispositif 16 selon le deuxième mode de réalisation présente l'avantage que plusieurs menaces peuvent être traitées simultanément. En effet, à l'étape 60 de neutralisation en particulier, il est possible d'orienter le faisceau émis par une source laser 36 selon une direction et d'orienter le faisceau émis par une autre source laser 36 suivant une direction différente. Pour cela, il suffit de commander différemment le deuxième système de déviation de faisceau 72 associé à la deuxième source laser 36.

Le dispositif 16 selon le deuxième mode de réalisation permet donc de protéger efficacement la plate-forme 10 contre plusieurs menaces extérieures simultanées.

En outre, comme dans le cas du premier mode de réalisation, le système optique 38 présente un coefficient de transmission maximal pour une seule longueur d'onde. De ce fait, la réalisation du dispositif 16 selon l'exemple de la figure 4 est également simplifiée par rapport à l'état de la technique.

En outre, le dispositif 16 présente une compacité améliorée, notamment lorsque toutes les unités lasers 26 sont à proximité de la face 28.

De plus, les saillies des optiques 34, 70 présentent une extension limitée vers l'extérieur. Ce type d'intégration du dispositif 16 dans le corps 12 est parfois appelé « intégration affleurante ». Cela permet d'éviter d'engendrer la formation de turbulence aérodynamique lors du déplacement de la plate-forme 10. En outre, il est plus difficile de détecter un tel dispositif 16 avec un radar.

En variante, la plate-forme 10 comporte plusieurs dispositifs 16 selon le deuxième mode de réalisation de manière à couvrir un champ d'observation plus important qu'avec un seul dispositif 16. Typiquement, la plate-forme 10 comprend trois dispositifs 16 ayant des caméras 24 dont les champs d'observations sont d'au moins 120°, l'ensemble des trois dispositifs 16 permettant de couvrir la périphérie de la plate-forme 10 susceptible d'être menacée. Cela garantit une meilleure protection de la plate-forme 10.

En outre, selon un mode de réalisation, le dispositif 16, avec des unités laser 26 de divergence augmentée de manière à couvrir une partie du champ de la caméra 24, est un dispositif seulement dédié à l'observation. Le dispositif 16 est alors adapté pour de «l'imagerie active multispectrale» puisque la caméra 24 d'observation détecte de la lumière émise par les unités laser 26.

**Revendications**

1. Dispositif (16) optronique propre à émettre une pluralité de longueurs d'onde, le dispositif (16) optronique est un dispositif de contre-mesures, le dispositif (16) comprenant :

   - une caméra (24) d'observation,

   le dispositif (16) étant **caractérisé en ce que** le dispositif (16) comprend, pour chaque longueur d'onde de la pluralité de longueurs d'onde :

      - une unité laser (26) comportant :

         - une source laser (36) propre à émettre un faisceau laser à la longueur d'onde,
         - un système optique (38) présentant un coefficient de transmission maximal pour la longueur d'onde, un coefficient de transmission étant maximal lorsque la courbe de transmission du système optique (38) en fonction de la longueur d'onde présente au moins un maximum relatif pour la longueur d'onde,

      le dispositif (16) comportant un support (22) muni d'une face (28) comportant au moins deux ouvertures (30, 32), la face (28) étant située devant les sources laser (36) et la camera (24) d'observation de sorte que les faisceaux laser émis par les sources laser (36) passent à travers au moins une ouverture (32) et les rayons lumineux en provenance du champ d'observation de la caméra (24) passent à travers une ouverture (30) de la face (28) différente de la ou des ouvertures (32) à travers lesquelles les faisceaux laser émis par les sources laser (36) passent.

2. Dispositif selon la revendication 1, dans lequel la face (28) comporte une ouverture centrale (30) et des ouvertures périphériques (32), les ouvertures périphériques étant agencées en anneau, les rayons lumineux en provenance du champ d'observation de la caméra (24) passant à travers l'ouverture centrale (30) et chaque faisceau laser émis par les sources laser (36) passant à travers une ouverture périphérique (32).

3. Dispositif selon la revendication 1, dans lequel la face (28) comporte une ouverture centrale (30) et des ouvertures périphériques (32), les ouvertures périphériques étant agencées en lignes, les rayons lumineux en provenance du champ d'observation de la caméra (24) passant à travers l'ouverture centrale (30) et chaque faisceau laser émis par les sources laser (36) passant à travers une ouverture périphérique (32).

4. Dispositif selon l'une quelconque des revendications 1 à 3, dans lequel chaque source laser (36) est une diode laser, de préférence une diode laser à cascade quantique.

5. Dispositif selon l'une quelconque des revendications 1 à 4, dans lequel le système optique (38) de chaque unité laser (26) comprend un système de déviation de faisceau (72).

6. Dispositif selon l'une quelconque des revendications 1 à 5, dans lequel la caméra (24) est munie d'une optique (34) et dans lequel l'optique (34) et les systèmes optiques (38) sont en saillie par rapport à la face (28) d'au plus dix centimètres.

7. Plate-forme (10) comportant au moins un dispositif (16) optronique selon l'une quelconque des revendications 1 à 6.

8. Plate-forme selon la revendication 7, dans lequel la plate-forme (10) comporte un corps (12) et dans lequel le dispositif (16) est mobile par rapport au corps (12) de la plate-forme (10) en rotation suivant deux axes perpendiculaires (Y, Z).

9. Plate-forme selon la revendication 7, dans lequel la plate-forme (10) comporte un corps (12) et dans lequel le dispositif (16) est intégré dans le corps (12) de la plate-forme (16).

10. Procédé de protection d'une plate-forme (10) selon l'une quelconque des revendications 7 à 9, le procédé étant caractérisé en que le procédé comporte une étape de :

- détection d'au moins une menace de la plateforme (10) par le dispositif (16) optronique,
- choix d'une action à mener à l'encontre de la ou les menaces,
- neutralisation de la ou des menaces par un ou des faisceaux laser des unités laser (26) du dispositif (16) optronique.

11. Procédé selon la revendication 10, dans lequel, le procédé comporte, en outre, une étape de :

- détermination de la position de la ou des menaces et
- centrage d'un ou des faisceaux laser des unités laser (26) sur la ou les menaces.

**Patentansprüche**

1. Optoelektronische Vorrichtung (16), die imstande ist, eine Mehrzahl von Wellenlängen auszusenden, wobei die optoelektronische (16) eine Gegenmaßnahmen-Vorrichtung ist, wobei die Vorrichtung (16) aufweist:

- eine Beobachtungs-Kamera (24),

wobei die Vorrichtung (16) **dadurch gekennzeichnet ist, dass** die Vorrichtung (16) aufweist, für jede Wellenlänge der Mehrzahl von Wellenlängen:

- eine Lasereinheit (26), die aufweist:

- eine Laserquelle (36), die imstande ist, einen Laserstrahl mit der Wellenlänge auszusenden,
- ein optisches System (38), das einen maximalen Transmissionskoeffizienten für die Wellenlänge hat, wobei ein Transmissionskoeffizient maximal ist, wenn die Transmissionskurve des optischen Systems (38) in Abhängigkeit von der Wellenlänge wenigstens ein relatives Maximum für die Wellenlänge hat,

wobei die Vorrichtung (16) aufweist einen Halter (22), der eine Fläche (28) hat, die wenigstens zwei Öffnungen (30, 32) aufweist, wobei die Fläche (28) vor den Laserquellen (36) und der Beobachtungs-Kamera (24) angeordnet ist, sodass die Laserstrahlen, die von den Laserquellen (36) ausgesendet werden, durch wenigstens eine Öffnung (32) passieren und die Lichtstrahlen aus dem Beobachtungsfeld der Kamera (24) durch eine Öffnung (30) der Fläche (28) passieren, die von der oder den Öffnungen (32) verschieden ist, durch welche die von den Laserquellen (36) ausgesendeten Laserstrahlen passieren.

2. Vorrichtung gemäß Anspruch 1, wobei die Fläche (28) eine zentrale Öffnung (30) und periphere Öffnungen hat (32) hat, wobei die peripheren Öffnungen ringförmig angeordnet sind, wobei die Lichtstrahlen aus dem Beobachtungsfeld der Kamera (24) durch die zentrale Öffnung (30) passieren und jeder Laserstrahl, der von den Laserquellen (36) ausgesendet wird, durch eine periphere Öffnung (32) passiert.

3. Vorrichtung gemäß Anspruch 1, wobei die Fläche (28) eine zentrale Öffnung (30) und periphere Öffnungen (32) aufweist, wobei die peripheren Öffnungen in Linien angeordnet sind, wobei die Lichtstrahlen aus dem Beobachtungsfeld der Kamera (24) durch die zentrale Öffnung (30) passieren und jeder Laserstrahl, der von den Laserquellen (36) ausgesendet wird, durch die periphere Öffnung (32) passiert.

4. Vorrichtung gemäß irgendeinem der Ansprüche 1 bis 3, wobei jede Laserquelle (36) ein Dioden-Laser, bevorzugt ein Dioden-Laser mit einer Quanten-Kaskade ist.

5. Vorrichtung gemäß irgendeinem der Ansprüche 1 bis 4, wobei das optische System (38) jeder Lasereinheit (26) ein Strahlablenksystem (72) aufweist.

6. Vorrichtung gemäß irgendeinem der Ansprüche 1 bis 5, wobei die Kamera (24) mit einer Optik (34) ausgestattet ist und wobei die Optik (34) und die optischen Systeme (38) bezüglich der Fläche (28) um höchstens 10 Zentimeter vorstehen.

7. Plattform (10) mit wenigstens einer optoelektronischen Vorrichtung (16) gemäß irgendeinem der Ansprüche 1 bis 6.

8. Plattform gemäß Anspruch 7, wobei die Plattform (10) einen Körper (12) aufweist und wobei die Vorrichtung (16) bezüglich des Körpers (12) der Plattform (10) rotationsbewegbar ist um zwei senkrechtstehende Achse (Y, Z).

9. Plattform gemäß Anspruch 7, wobei die Plattform (10) einen Körper (12) aufweist und wobei die Vorrichtung (16) in den Körper (12) der Plattform (16) integriert ist.

10. Verfahren zum Schutz einer Plattform (10) gemäß irgendeinem der Ansprüche 7 bis 9, wobei das Verfahren **dadurch gekennzeichnet ist, dass** das Verfahren aufweist einen Schritt des:

- Erfassens wenigstens einer Bedrohung der Plattform (10) mittels der optoelektronischen Vorrichtung (16),
- Wählens einer Aktion zum Durchführen einer Gegenmaßnahme gegen die Bedrohung oder die Bedrohungen,
- Neutralisierens der Bedrohung oder der Bedrohungen mittels eines Laserstrahles oder Laserstrahlen von den Lasereinheiten (26) der optoelektronischen Vorrichtung (16).

11. Verfahren gemäß Anspruch 10, wobei das Verfahren ferner aufweist einen Schritt des:

- Ermittelns der Position der Bedrohung oder der Bedrohungen und
- Fokussieren eines Laserstrahls oder von Laserstrahlen der Lasereinheiten (26) auf die Bedrohung oder die Bedrohungen.

## Claims

1. An optronic device (16) that is capable of emitting a plurality of wavelengths, the optronic device (16) being an optronic counter measures device, the device (12) comprising:

   - an observation camera (24) ;

   the device (16) being **characterised in that** the device (16) comprises, for each wavelength of the plurality of wavelengths :

   - a laser unit (26) comprising of:

     - a laser source (36) capable of emitting a laser beam at the wavelength of the laser unit;
     - an optical system (38) having a maximal transmission coefficient for the wavelength, the transmission coefficient being maximal when the transmission curve of the optical system as a function of the wavelength having at least one relative maximum at the level of the wavelength,

   the device (16) comprising a support (22) provided with a face (28) that includes at least two openings (30, 32), the face (28) being situated in front of the laser sources (36) and the observation camera (24) in such a manner that the laser beams emitted by the laser sources (36) pass through at least one opening (32) and the light rays coming from the field of view of the camera (24) pass through an opening (30) of the face (28) that is different from the opening or openings (32) through which the laser beams emitted by the laser sources (36) pass.

2. A device according to claim 1, wherein the face (28) includes one central opening (30) and multiple peripheral openings (32), the peripheral openings being arranged in a ring, the light rays coming from the field of view of the camera (24) passing through the central opening (30) and each laser beam emitted by the laser sources (36) passing through a peripheral opening (32).

3. A device according to claim 1, wherein the face (28) includes one central opening (30) and multiple peripheral openings (32), the peripheral openings being arranged in rows, the light rays coming from the field of view of the camera (24) passing through the central opening (30) and each laser beam emitted by the laser sources (36) passing through a peripheral opening (32).

4. A device according to any one of claims 1 to 3, wherein each laser source (36) is a laser diode, preferably a quantum cascade laser diode.

5. A device according to any one of claims 1 to 4, wherein the optical system (38) of each laser unit (26) includes a beam deflection system (72).

6. A device according to any one of claims 1 to 5, wherein the camera (24) is provided with an optic lens (34) and wherein the optic (34) and the optical systems (38) are arranged to be projecting out in relation to the face (28) by at most ten centimetres.

7. A platform (10) comprising at least one optronic device (16) according to any one of claims 1 to 6.

8. A platform according to claim 7, wherein the platform (10) comprises a body (12) and wherein the device (16) is movable relative to the body (12) of the platform (10) in rotational motion along two perpendicular axes (Y, Z).

9. A platform according to claim 7, wherein the platform (10) comprises a body (12) and wherein the device (16) is integrated into the body (12) of the platform (16).

10. A protection method for protecting a platform (10) according to any one of claims 7 to 9, the method being **characterised in that** the method includes a step of :

   - detection of at least one threat to the platform (10) by the optronic device (16) ;
   - selection of an action to be taken to counter the threat or threats ;
   - neutralisation of the threat or threats by means of one or more laser beams from the laser units (26) of the optronic device (16).

11. A method according to claim 10, wherein the method includes in addition, a step of :

   - determination of the position of the threat or threats ; and
   - centering of one or more laser beams from the laser units (26) on the threat or threats.

FIG.1

FIG.2

FIG.3

# FIG.4

**EP 2 929 284 B1**

## RÉFÉRENCES CITÉES DANS LA DESCRIPTION

**Documents brevets cités dans la description**

- US 2011084195 A1